Europäisches Patentamt

European Patent Office

Office européen des brevets

(19)

(11) Veröffentlichungsnummer: **0 196 416**
**B1**

(12) **EUROPÄISCHE PATENTSCHRIFT**

(45) Veröffentlichungstag der Patentschrift: **11.04.90**

(51) Int. Cl.⁵: **H 01 M 2/16**

(21) Anmeldenummer: **86101074.2**

(22) Anmeldetag: **28.01.86**

(54) **Batterieseparator.**

(30) Priorität: **19.03.85 JP 57042/85**

(43) Veröffentlichungstag der Anmeldung:
**08.10.86 Patentblatt 86/41**

(45) Bekanntmachung des Hinweises auf die
Patenterteilung:
**11.04.90 Patentblatt 90/15**

(84) Benannte Vertragsstaaten:
**DE FR GB NL SE**

(56) Entgegenhaltungen:
**EP-A-0 109 619**
**DE-A-2 164 901**
**FR-A-2 224 879**
**US-A-3 147 150**

(73) Patentinhaber: **Firma Carl Freudenberg**
**Höhnerweg 2-4**
**D-6940 Weinheim/Bergstrasse (DE)**

(72) Erfinder: **Nakao, Etsurou**
**1430-3 Harimada-cho**
**Moriyama-shi Shiga-ken (JP)**
Erfinder: **Yamazaki, Hiroaki**
**1399 Komahane Souwa-machi**
**Sashima-gun Ibaragi-ken (JP)**
Erfinder: **Hirooka, Masaki**
**1399 Komahane Souwa-machi**
**Sashima-gun Ibaragi-ken (JP)**

Courier Press, Leamington Spa, England.

# EP 0 196 416 B1

**Beschriebung**

Die Erfindung befaßt sich mit einem Separatorenmaterial für alkalische Batterien, wewlches aus einem Polyamid-Faservliesstoff besteht.

Faservliesstoffe der genannten Art aus 6-Polyamid und 6.6-Polyamid sind bekannt. Sie zeichnen sich durch ihre hohe Elektrolyt-Haltefähigrkeit und Entladungskapazität aus und werden daher bevorzugt bei hohen geforderten Entladestromstärken eingesetzt.

Ein Problem stellen jedoch bei hohen Temperaturen ihre geringe Widerstandsfähigkeit gegen Alkalien sowie die Anfälligkeit gegen Oxidation dar; so entstehen bei der alkalischen Zersetzung der Fasern Sulfat- und Carbonat-Radikale, was der Lebensdauer der Batterie abträglich ist.

Chemisch widerstandsfähigere Polyolefinfasern als Alternative besitzen hingegen nicht die für hohe Entladeströme erforderliche Elektrolythaltefähigkeit.

Est ist die Aufgabe der vorliegenden Erfindung, einen Polyamid-Faservliesstoff als Separator für alkalische Batterien so zu verbessern, daß er neben seiner bekannt guten Elektrolythaltefähigkeit aufgrund hoher Hydrophilie sowie seiner Verwendbarkeit bei hohen Entladeströmen eine verbesserte Widerstandsfähigkeit gegen Alkalien und Oxidation bei hohen Temperaturen aufweist.

Die Lösung dieser Aufgabe besteht in einem gattungsgemäßen Separator mit den kennzeichnenden Merkmalen des Anspruchs 1. Die Unteransprüche enthalten bevorzugte Ausgestaltungsformen dieses Separatorenmaterials. Weiterhin wir ein Verfahren zur Herstellung eines solchen Separators beansprucht.

Das Verhältnis der Amid- zu den methylgruppen, ($-CONH-$):($-CH_2-$), ist im folgenden pro wiederkehrende Einheit in der Polymerkette angegeben und beträgt für 6-Polyamid und 6.6-Polyamid etwa 1:5.

Polyamidfasern gemäß de Erfindung enthalten somit 10.10-, 11-, 12- oder 13-Polamid. Es wurde überraschenderweise gefunden, daß ein Separator aus Fasern dieses Materials eine schlechte Alkalien- und Oxidations-Resistenz besitzt, sobald das Fasermaterial ein ($-CONH-$):($-CH_2-$)$-$ Verhältnis größer als 1:9 besitzt, und daß die Hydrophilie und somit die Elektrolythaltefähigkeit bei einem Verhältnis geringer als 1-12 unzureichend werden. Das erfindungsgemäß Verhältnis liegt daher eindeutig zwischen 1:9 bis 1:12, wo alle Materialeigenschaften gemeinsam gute Werte aufweisen.

Der erfindungsgemäß Separator kann mit den bekannten Methoden hergestellten werden, so etwa durch Trocken- ode Naßlegeverfahren. Vorteilhafterweise wird man bei der Verwendung von ausschließlich Polyamidfasern, also ohne Bindefasern, das Schmelzblasverfahren anwenden, indem über Düsen aus der Schmelze gesponnene Fasern durch einen ringförmig diese umgebenden Beißluftstrom in Abblasrichtung verstreckt und in noch klebefähigem Zustand aufeinander abgelegt werden.

Hierdurch werden kontinuierliche Fäden mit mittleren Durchmessern von 3 bis 10 µm erhalten, was die Elektrolyt-Haltefähigkeit des Vliesstoffes wegen der größeren, dem Medium zuf Verfüngung stehenden Kontaktfläche erheblich steigert. Die Untergrenze von 3 µm für den Faserdurchmesser wird durch die Tatsache gesetzt, daß bei noch geringeren Werden der Vliesstoff zu dicht wird und somit den erforderlichen Durchtritt von an den Eletroden entstehenden Gasblasen zu sehr behindert.

Zweckmäßig werden die schmelzgeblasenen Fasern auf einer bewegten Fläche gesammelt, die in einem Winkel von 5 bis 80° zur Abblasrichtung geneigt ist. Durch diese Maßnahme wird ein Faservlies mit in vorteilhafter Weise zum größtem Teil in eine Richtung orientieren, verstreckten Fasern erhalten, welches eine hohe unidirektionale mechanische Festigkeit aufweist.

Die bevorzugte Faserdichte für den Separator wurde zu 0,2 bis 0,8 g/cm$^3$ gefunden.

Falls eine weitere Erhöhung der Elektrolythaltefähigkeit bzw. Hydrophilie gewünscht wird, können die Fasern in an sich bekannter Weise mit oberflächenaktiven Agenzien behandelt sein. Selbstverständlich wird dabei auf deren Alkali-Resistenz geachtet werden müssen. Als zweckmäßig erwiesen sich solche mit HLB-Werten zwischen 12 und 15.

Das folgende Beispiel mit den Vergleichsbeispielen soll die günstigen Paramete des erfindungsgemäßen Separators in nich einschränkender Weise näher verdeutlichen.

**Beispiel**

12-Polyamid (Amid:Methylen = 1:11) wird durch Düsenreihe schmelzgeblasen. Jede Düse ist 350°C heiß und hat einen Durchmesser von 0,3 mm. Die Extrusionsrate beträgt 0,3 g/in. Aus Schlitzen beiderseits de Düsen strömt dabei 380°C heiße Druckluft und verstreckt die Fasern in Abzugsrichtung, wobei mittlere Faserdurchmesser von 6 µm erhalten werden. Anschließend erfolgt die Alblage zu einem Vlies auf einer Sammelfläche.

Die Eigenschaften dieses Batterieseparators gehen aus der den Vergleichsbeispielen folgenden Tabelle hervor.

## Vergleichsbeispiel 1

Ein Vliesstoff aus 6-Polyamid-Fasern mit einem mittleren Faserdurchmesser von 6 µm wurde wie im vorangegangenen Beispiel hergestellt. Das Verhältnis ($-CONH-$):($-CH_2-$) betrug 1:5. Die deutlich schlechtere Werte für Alkalien- und Oxidationsresistenz (Tabelle) machen das Material ungeeignet für Alkali-Batterieseparatoren.

2

Vergleichsbeispiel 2

Ein Batterieseparator besteht aus einem Faservliesstoff mit 70 Gew.-% 6.6-Polyamid- und 30 Gew.-% Kern-Mantel-Fasern (Kern: 6.6-Polyamid; Mantel: 6-Polyamid), welcher durch Anschmelzen bei 240°C gebunden wurde. Der Vliesstoff zeigt ähnlich schlechte Werte wie derjenige des Vergleichsbeispiels 1 (Tabelle).

### TABELLE
Mechanische und chemische Eigenschaften

| Eigenschaften | Beispiel | Vergleichs-beispiel 1 | Vergleichs-beispiel 2 | Prüfver-fahren |
|---|---|---|---|---|
| Basisgewicht (g/m$_2$) | 72 | 72 | 75 | — |
| Dicke (mm) | 0.28 | 0.22 | 0.28 | A |
| Alkalien-Resistenz (%) | 0.1 | 40 | 30 | B |
| Oxidations-resitenz (%) | 3.5 | Auflösung | Auflösung | C |
| Elektrolyt-haltefähigkeit (%) | 250 | 260 | 250 | D |

Erläterung der Prüfverfahren:

A: Messung mit dem Mikrometer

B: Gewichtsverlust in Prozent beim Eintauchen in eine 30%ige wäßrige LOH—Lösung bei 80°C nach 1000 Studen.

C: Gewichtsverlust in Prozent beim Eintauchen in eine 50°C heiße Mischung aus 250 ml einer 5%igen wäßrigen KMnO$_4$- und 50 ml einer 30%igen KOH-Lösung nach einer Stunde.

D: Gewichtsprozent an vom Separator nach 10 Minuten zurückgehaltener 30%iger KOH-Lösung, bezogen auf das Gewicht der direkt nach dem vollständigen Eintauchen aufgenommenen Lösungsmenge.

Aus der Tabelle, in der die mechanischen und chemischen Eigenschaften aufgeführt sind, geht deutlich hervor, daß das Flüssigkeits-Rückhaltevermögen in allen Beispielen etwa gleich ist, die Alkalien- und Oxidationsbeständigkeit bei erhöhten Temperaturen hingegen in den nich erfindungsgemäßen Vergleichsbeispielen erheblich schlechter ist und is zur Zerstörung des Vliesstoffes führt.

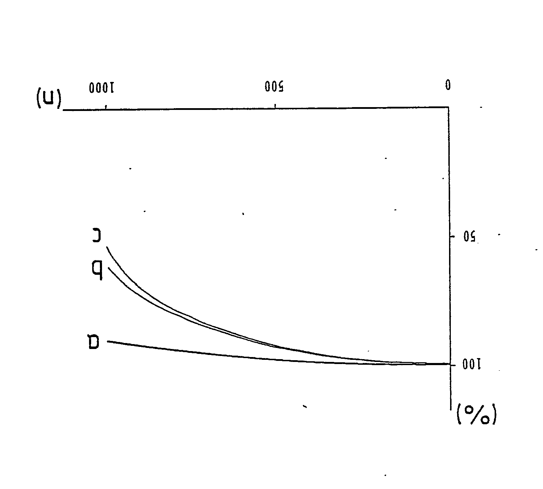

Die Figure zeigt die elektrischen Eigenschaften der Separatoren gemäß den Beispielen bei ihrem Einsatz in Alkalibatterien auf.

Testdaten:

Die Batterien weisen eine Kapazität von 1200 mAh auf. Sie wurden wiederholten Ladungs-/Entladungs-Zyklen unterworfen, währenddessen die verbleibende prozentuale Entladungs-Kapazität zwischendurch gemessen wurde.

Die Meßtemperatur lag bei 20°C, die Ladebedingung war 400 mA×4h, die Entladebedingung 1Ω × 2h. Auf der Abszisse sind die Anzahl n der Ladungs-/Entladungszyklen, auf der Ordinate als Funktion hiervon die verbleibende prozentuale Entladungskapazität, bezogen auf die anfängliche Entladungskapazität, aufgetragen.

Der Verlauf der Graphen zeigt deutlich, daß die Entladungskapazität bei Verwendung eines erfindungsgemäßen Separators (Beispiel) auch nach 1000 Zyklen nur geringfügig abnimmt (Kurve a). Eine solche Ausführung hat demnach eine lange Lebensdauer.

Batterien mit den Separatoren aus den Vergleichsbeispielen 2 und 1 jedoch (Kurven b und c) erreichen nach 1000 Zyklen nur noch 50% Restkapazität und damit sehr rasch des Ende ihrer Gebrauschfähigkeit.

Die Zusammenfassung der Erkenntnisse aus der Tabelle und dem Diagramm ergibt also, daß sowohl die mechanischen und chemischen als auch die elektrischen Eigenschaften eines Separators durch die erfindungsgemäß Ausgestaltung gemeinsam deutlich verbessert werden konnten.

### Bezugszeichenliste

%  verbleibende prozentuale Entladungskapazität

n  Anzahl der vollzogenen Ladungs-/Entladungs-Zyklen

a  Funktion für einen Separator gemäß Beispiel

b  Funktion für einen Separator gemäß Vergleichbeispiel 2

c  Funktion für einen Separator gemäß Vergleichbeispiel 1.

# EP 0 196 416 B1

## Patentansprüche

1. Separator für Alkali-Batterien, welcher aus einem Polyamid-Faservliesstoff besteht, dadurch gekennzeichnet, daß das zahlenmäßige Verhältnis der Amidgruppen zur den Methylengruppen des Polyamidharzes zwischen 1:9 und 1:12 beträgt.

2. Separator nach Anspruch 1, dadurch gekennzeichnet, daß er zu 100% aus Polyamidfasern besteht, welche in Form kontinuierlicher Filamente mit einem mittleren Durchmesser von 3 bis 10 μm vorliegen.

3. Separator nach Anspruch 2, dadurch gekennzeichnet, daß die Mehrzahl der Polyamidfasern in eine Richtung orientiert und in sich verstreckt sind.

4. Separator nach einem der vorhergehenden Ansprüche, dadurch gekennzeichnet, daß die Faserdichte 0,2 bis 0,8 g/cm³ beträgt.

5. Separator nach einem der vorhergehenden Ansprüche, dadurch gekennzeichnet, daß die Fasern mit hydrophilierenden Agenzien behandelt sind.

6. Separator nach einem der vorhergehenden Ansprüche, dadurch gekennzeichnet, daß seine Fasern aus 10.10-, 11-, 12- oder 13-Polyamid bestehen.

7. Verfahren zur Herstellung eines Separators nach Anspruch 2 bis 6, dadurch gekennzeichnet, daß die Polyamidfasern durch Düsen aus der Schmelze ersponnen, durch einen ringförmig diese Düsen umgebenden Heißluftstrom in Abzugstrichtung verstreckt und in noch klebefähigem Zustand aufeinander abgelegt werden.

## Revendications

1. Séperateur destiné à des batteries alcalines, ce séparateur étant constitué d'un nontissé en polyamide, caractérisé en ce que le rapport numérique des groupes amide aux groupes méthyle de la résine polyamide se situe entre 1:9 et 1:12.

2. Séparateur selon la revendication 1, caractérisé en ce qu'il est constitué à 100% de fibres en polyamide, celles-ci se présentant sous forme de filaments continues ayant un diamètre moyen de 3 à 10 μm.

3. Séparateur selon la revendication 2, caractérisé en ce que la majorité des fibres en polyamide sont orientées en une seule direction et sont étirées en soi.

4. Séparateur selon l'une quelconque des revendications précédentes, caractérisé en ce que l'épaisseur des fibres représente 0,2 à 0,8 g/cm³.

5. Séparateur selon l'une quelconque des revendications précédentes, caractérisé en ce que les fibres sont traitées avec des agents hydrophilisants.

6. Séparateur selon l'une quelconque des revendications précédentes, caractérisé en ce que les fibres sont constituées de polyamide-10.10, -11, -12 ou -13.

7. Procédé pour la fabrication d'un séparateur selon les revendications 2 à 6, caractérisé en ce que les fibres en polyamide extrudées hors de la masse en fusion via des fillières, sont étirées par un courant d'air chaud entourant annulairement les fillières, dans le sens, de l'aspiration, et sont déposées l'une sur l'autre lorsqu'elles se trouvent encore à l'état collant.

## Claims

1. A separator for alkali batteries, which is composed of a polyamide-fibre nonwoven material, characterized in that the numerical ratio of the amide groups to the methylene groups of the polyamide resin is between 1:9 and 1:12.

2. A separator according to claim 1, characterised in that it is composed to 100% of polyamide fibres which are in the form of continuous filaments having an average diameter of 3 to 10 μm.

3. A separator according to claim 2, characterised in that the majority of the polyamide fibres are oriented in one direction and stretched.

4. A separator according to any of the preceding claims, characterized in that the fibre density is 0.2 to 0.8 g/cm³.

5. A separator according to any of the preceding claims, characterized in that the fibres are treated with hydrophilizing agents.

6. A separator according to any of the preceding claims, characterized in that its fibres are composed of 10.10-, 11-, 12- or 13-polyamide.

7. A process for the production of a separator according to any of claims 2 to 6, characterized in that the polyamide fibres are spun from the melt through nozzles, stretched in the direction of take-off by a hot-air stream annularly surrounding the said nozzles and laid on one another in the still tacky state.

4

(u)    1000    500    0

c
b

a

50

100

(%)

1